(19) Europäisches Patentamt
European Patent Office
Office européen des brevets

(11) **EP 1 885 154 B1**

(12) **EUROPEAN PATENT SPECIFICATION**

(45) Date of publication and mention
of the grant of the patent:
**03.07.2013 Bulletin 2013/27**

(51) Int Cl.:
*H04R 3/04* (2006.01)    *G10L 21/02* (2013.01)

(21) Application number: **06016029.8**

(22) Date of filing: **01.08.2006**

(54) **Dereverberation of microphone signals**

Enthallung eines Mikrofonsignals

Déreverbération des signaux d'un microphone

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**06.02.2008 Bulletin 2008/06**

(73) Proprietor: **Nuance Communications, Inc.
Burlington, MA 01803-4613 (US)**

(72) Inventors:
• **Buck, Markus
88400 Biberach (DE)**
• **Schmidt, Gerhard Uwe
89081 Ulm (DE)**
• **Haulick, Tim
89143 Blaubeuren (DE)**

(74) Representative: **Grünecker, Kinkeldey,
Stockmair & Schwanhäusser
Leopoldstrasse 4
80802 München (DE)**

(56) References cited:
**EP-A- 1 521 240       WO-A-2006/011104
US-A1- 2005 244 023**

• **LEBART K ET AL: "A NEW METHOD BASED ON SPECTRAL SUBTRACTION FOR SPEECH DEREVERBERATION" May 2001 (2001-05), ACUSTICA, S. HIRZEL VERLAG, STUTTGART, DE, PAGE(S) 359-366 , XP009053193 ISSN: 0001-7884 chapters 1,2 subchapters 3.1, 3.3**
• **M. R. SCHROEDER: "New Method of Measuring Reverberation Time" THE JOURNAL OF THE ACOUSTICAL SOCIETY OF AMERICA, [Online] vol. 37, no. 3, 14 December 1964 (1964-12-14), - March 1965 (1965-03) pages 409-412, XP002429121 Retrieved from the Internet: URL: http://scitation.aip.org/getpdf/servle t/ GetPDFServlet?filetype=pdf&id=JASMAN0000 37000003000409000001&idtype=cvips&prog=no r mal> [retrieved on 2007-04-12]**

**Description**

**Field of Invention**

The present invention relates to a system and a method for signal processing, in particular, speech signal processing, with dereverberation of a microphone signal. The invention particularly relates to dereverberation of a microphone signal detected in a loudspeaker-room-microphone system.

**Background of the invention**

The enhancement of the quality of audio and speech signals in a communication system is a central topic in acoustic and, in particular, speech signal processing. The communication between two parties is often carried out in a noisy background environment and noise reduction as well as echo compensation are necessary to guarantee intelligibility. Prominent examples are hands-free voice communication in vehicles and automatic speech recognition.

Of particular importance is the suppression of reverberation that can severely affect the quality of audio signals. A microphone used in an indoor communication system not only detects audio signals generated by an audio source directly but also detects reflections of the audio signals with some time delay due to the finite acoustic room, e.g. an office room or a vehicular cabin. The detected acoustic spectrum is, therefore, smeared over time. The intelligibility of speech signals can be significantly reduced by reverberant signal portions in microphone signals.

Thus, reverberation poses a severe problem, e.g., in automatic speech recognition and communication systems installed in vehicles, particular, since the reverberating characteristics of vehicular cabins as well as office rooms are rather complex and time-dependent.

Several methods for the dereverberation of microphone signals are known in the art. For example, it is attempted to reduce dereverberation by means of deconvolution, i.e. inverse filtering using an estimate for the acoustic channel. Deconvolution can be performed in the time domain or in the cepstral domain. However, this kind of signal processing suffers from the dependence on an accurate estimate of the acoustic channel which in practical applications is almost impossible.

According to an alternative approach, the direct-path speech signal is processed by pitch enhancement or by linear predictive coding (LPC) analysis. In a multi-channel approach averaging over multiple microphone signals is performed to obtain a reduction of the reverberation contribution to the processed signal. However, both approaches cannot guarantee a sufficiently high quality of the wanted signal. In addition, implementation of the multi-channel approach is rather expensive.

Further related art may be found in the following patent documents:

   EP-A-1 521 240, WO 2006/011104 A and US-B1-6 694 020.

Still further related art may be found in the following technical publications:

-   LEBART K ET AL: "A NEW METHOD BASED ON SPECTRAL SUBTRACTION FOR SPEECH DEREVERBERATION" May 2001 (2001-05), ACUSTICA, S. HIRZEL VERLAG, STUTTGART, DE, PAGE(S) 359-366 ,

-   M. R. SCHROEDER: "New Method of Measuring Reverberation Time" THE JOURNAL OF THE ACOUSTICAL SOCIETY OF AMERICA, vol. 37, no. 3, 14 December 1964 (1964-12-14), (1965-03) pages 409-412.

Despite the engineering process in recent years current dereverberation reduction is still not satisfying and reliable enough for practical applications.

It is therefore the problem underlying the present invention to overcome the above-mentioned drawbacks and to provide a system and a method for acoustic and speech signal processing exhibiting an improved dereverberation of microphone signals that is, in particular, suitable for hands-free telecommunication systems and automatic speech recognition systems.

**Description of the Invention**

The above-mentioned problem is solved by the method for dereverberation of a microphone signal according claim 1.

Here and in the following the microphone signal is considered as a digital one, i.e. as an electric microphone signal that was already subject to A/D conversion. The microphone signal may preferably be transformed into the frequency domain and subsequently divided into the frames or each of the frames may separately be transformed into the frequency domain requiring multiple Fourier transform operation but each with less Fourier components to be calculated.

As a matter of fact, the overall processing may be performed in the frequency domain or after filtering the microphone signal by filter banks with sub-band signals according to the design properties and individual preferences. Moreover, the overall processing may be performed in the time domain with the microphone signal divided into frames.

The reverberation energy can be defined as the squared magnitude of the unwanted reverberant signal portion present in the microphone signal. According to the invention, in at least some frames or sub-bands the energy values of the reverberant signal portion are estimated. It is noted that herein the term "energy" is used for squared magnitudes of signals in the time as well as the frequency and sub-band domains. In effect, the filtering results in a subtraction of at least some part of the unwanted reverberant signal portion.

Processing for dereverberation is not necessary for all frames. In fact, the first frames almost exclusively exhibit the wanted signal (and, probably, some ambient noise perturbation), but rather no reverberation signal portion.

Different from the art not only the information contained in the microphone signal itself is used for the dereverberation but also the information of a loudspeaker signal. In the art, model parameters have to estimated for the dereverberation processing on the basis of the already reverberated microphone signals without any access to the original acoustic (speech) signals. According to the inventive method, dereverberation of a microphone can significantly be improved, since a loudspeaker signal can be considered as a reference signal by means of which the reverberation energy can be estimated.

In principle, there are several ways of using a loudspeaker signal for estimating the reverberation energy (see also discussion below). Given the loudspeaker signal on the one hand and the microphone signal in the other, the impulse response of the loudspeaker-room-microphone system can directly be determined. From the impulse response the reverberation energy can directly be derived, since the unwanted reverberant signal portion of a microphone signal can be represented as $r(n) = \sum_{l=D_t}^{\infty} x_c(n-l)h(l)$, with the discrete time index n, the loudspeaker signal $x_c(n)$ and the impulse response of the loudspeaker-room-microphone system h(n). The sum starts with some discrete time value $D_t$ indicating the beginning of reflections of the detected acoustic signal causing the reverberation. In other word, for a time interval up to $D_t$ the microphone signal is dominated by the energy of the wanted signal.

Thus, according to an embodiment the inventive method comprises estimating the impulse response of a loudspeaker-room-microphone system comprising the at least one loudspeaker providing the at least one loudspeaker signal and at least one microphone providing the microphone signal and wherein the reverberation energy of the at least some of the frames or sub-bands is estimated on the basis of the estimated impulse response of the loudspeaker-room-microphone system.

A particularly efficient way of estimating the impulse response is using an adaptive filtering means configured for automatic adaptation of the filter coefficients in order to model the impulse response. Therefore, the herein disclosed method may comprise filtering the microphone signal by means of an adaptive echo cancellation filtering means and wherein the impulse response of the loudspeaker-room-microphone system is determined from the adapted filter coefficients of the adaptive echo cancellation filtering means.

The echo cancellation filtering means can comprise linear or non-linear adaptive filter by which replica of acoustic feedback are synthesized and a compensation signal is obtained from the received signal of the loudspeakers. This compensation signal is subtracted from the sending signal of the microphone thereby generating a resulting echo reduced signal to be sent to the remote subscriber (see, e.g., Acoustic Echo and Noise Control, E. Hänsler and G. Schmidt, John Wiley & Sons, New York, 2004). An adaptive finite impulse response (FIR) filter can, e.g., be employed. The adaptation of the filter coefficients may be carried out by the normalized least mean square (NLMS) algorithm.

The actual filtering of the microphone signal on the basis of the estimated reverberation energy of the at least some of the frames or sub-bands can preferably be performed by a Wiener filter that is a well-approved robust filtering means. However, other filters as, e.g., a magnitude filter, may be employed instead. In the case of signal processing in the frequency domain the microphone signal has to be Fourier transformed to obtain Fourier transformed signals $Y_\mu(k)$, where k and $\mu$ denote the frame number and the index of the frequency bin, respectively. It is noted that, in general, the microphone signal may be Fourier transformed before the division into frames or it may be divided into frames followed by Fourier transformations of each frame.

At least some of the Fourier transformed signals $Y_\mu(k)$ can be filtered by a Wiener filter $W_\mu(k) = 1 - |\hat{R}_\mu(k)|^2 / |Y_\mu(k)|^2$ to obtain filtered signals $\hat{X}_\mu(k)$ according to $\hat{X}_\mu(k) = W_\mu(k) Y_\mu(k)$, where $|\hat{R}_\mu(k)|^2$ denotes the estimated reverberation energy of the at least some of the frames.

In an embodiment wherein the signal processing is performed for sub-band signals obtained from the microphone signal by means of a filter bank the microphone signal is filtered by a filter-bank to obtain sub-band signals $Y_\mu(k)$, where k and $\mu$ denote the time index of the subsampled microphone signal that is filtered by the filter-bank and the index of the sub-band, respectively; and

at least some of the sub-band signals $Y_\mu(k)$ are filtered by a Wiener filter $W_\mu(k) = 1 - |\hat{R}_\mu(k)| / |Y_\mu(k)|^2$ to obtain filtered signals $\hat{X}_\mu(k)$ according to $\hat{X}_\mu(k) = W_\mu(k) Y_\mu(k)$, where $|\hat{R}_\mu(k)|^2$ denotes the estimated reverberation energy of the at least some of the sub-bands.

As usual the microphone signal is subsampled due to the frame- or block-based processing. In the inventive method, an estimate for the reverberation energie values of the considered frames (sub-bands) is required. It is desirable to obtain an estimate for the reverberation energy as accurate as possible in order to guarantee reliable dereverberation.

According to an embodiment, the reverberation energy $|\hat{R}_\mu(k)|^2$ of the at least some of the frames or sub-blocks is estimated according to the following formula

$$|\hat{R}_\mu(k)|^2 = |Y_\mu(k-D)|^2 A_\mu \exp(-\gamma_\mu D) + |\hat{R}_\mu(k-1)|^2 \exp(-\gamma_\mu)$$

where D is a predetermined delay, $A_\mu$ is an amplitude representing the ratio of direct-path energy to reverberation energy and $y_\mu$ is a parameter determined on the basis of the at least one loudspeaker signal and wherein k denotes the frame number or the time index of the subsampled microphone signal, respectively, and $\mu$ denotes the index of the frequency bin or the index of the sub-band, respectively. The predetermined delay takes into account that the initial part of the microphone signal is dominated by the direct acoustic path, i.e. a significant reverberant signal portion is present after some delay D, e.g. $D \approx 30$ ms. The predetermined amplitude $A_\mu$ can, in principle, be estimated when the position of a speaking person relative to a loudspeaker is known, e.g., from a beamforming of microphone signals obtained by a microphone array (see discussion below). However, $A_\mu$ can be chosen as a real value of the range from 0.1 to 0.5.

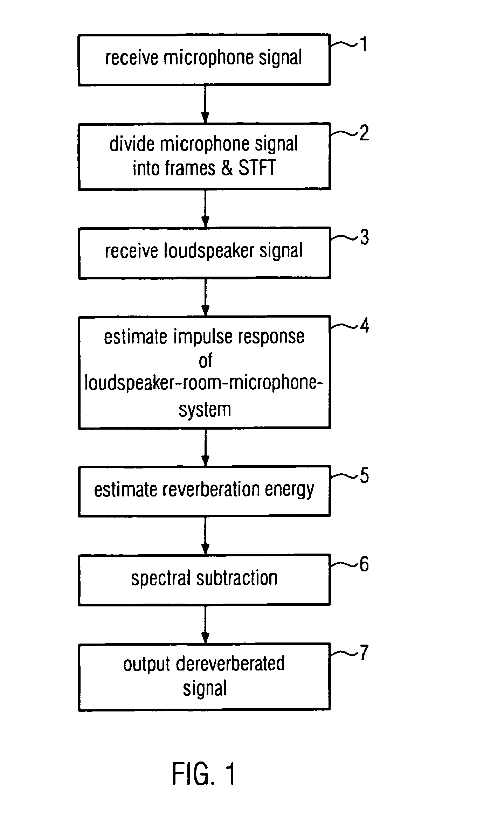

The parameter $y_\mu$ can be determined in the time domain or the frequency domain or the sub-band domain. When determined in the frequency domain or the sub-band domain they can be averaged over frequencies or sub-bands in order to obtain a parameter $y_\mu$ that does not any longer depend on the frequency. A motivation of this formula is given in the detailed description with reference to Figure 1 below.

If an adaptive echo cancellation filtering means is employed, the parameter $Y_\mu$ may be determined as follows. The reverberation time $T_{60}$, which is defined as the time the reverberation needs to decay by 60 dB, is estimated form the energy decay curve ($EDC_L(n)$) given by the filter coefficients $\hat{h}_L(n)$ of echo cancellation filtering means

$$EDC_L(n) = \frac{\sum_{i=n}^{L_L}\left|\hat{h}_L(i)\right|^2}{\sum_{i=0}^{L_L}\left|\hat{h}_L(i)\right|^2}$$

where $L_L$ denotes the length of the echo cancellation filtering means. The slope of the $EDC_L(n)$ is related (inverse proportional) to the reverberation time $T_{60}$.

Then, the parameter $y_\mu$ can be calculated as a function of the reverberation time and a subsampling rate $R_s$ by which the microphone signal is sub-sampled for frame or sub-block processing, in particular, according to the formula $y_\mu = 6 \ln 10 \, R_s / T_{60} f_s$, where $f_s$ denotes the sampling rate of the microphone signal in the time domain (see also description below).

In an embodiment, the microphone signal is also filtered by means of a filtering means and wherein the filter coefficients of the filtering means are determined from the adapted filter coefficients of an adaptive echo cancellation filtering means in order to obtain an estimate for the reverberant signal portion.

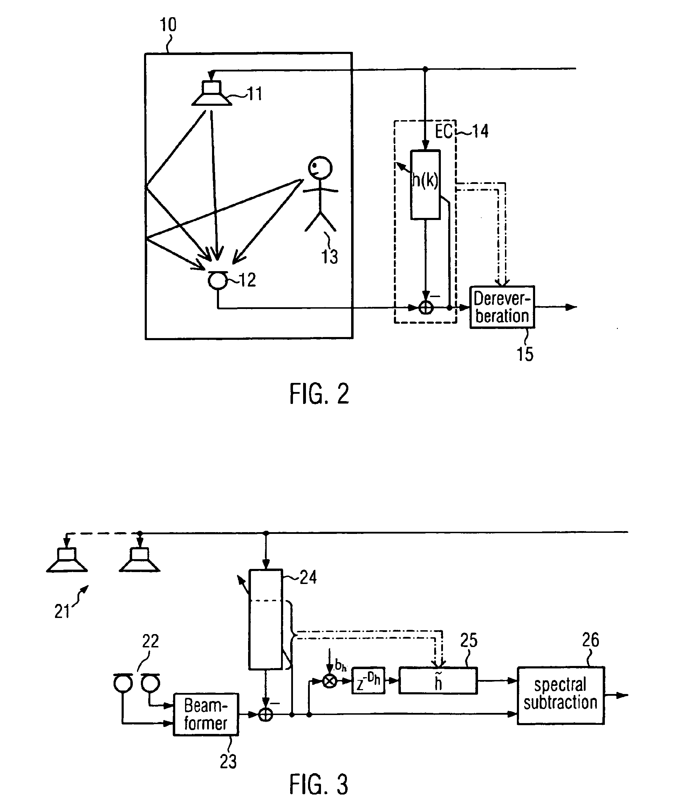

In particular, according to one example of the herein disclosed method of dereverberation of a microphone signal, the reverberation energy is estimated more directly, namely by filtering the microphone signal by an adaptive filtering means having only filter coefficients that represent the impulse response of the loudspeaker-room-microphone system corresponding to the reverberation tail of the microphone signal to estimate a reverberation portion of the microphone signal. Then, the reverberation energy is estimated by means of the estimated reverberation portion of the microphone signal (see also detailed description with reference to Figure 3). By reverberation tail the frames or sub-blocks are referred to that include significant reverberation rather than the direct acoustic path from a sound or speech source to the detecting microphone(s).

The above-mentioned problem is also solved by the signal processing means according to claim 9.

The signal processing means may further comprise a processing means configured to divide the microphone signal into frames and a Fourier transformation means configured to Fourier transform the microphone signal before division into the frames or to Fourier transform the individual frames or further comprising a filter bank configured to divide the microphone signals into sub-band microphone signals.

The dereverberation filtering means of the signal processing means may comprise a spectral subtraction means, in particular, a Wiener filter, configured to filter the microphone signal for at least some of the frames or to filter at least some of the sub-band microphone signals on the basis of the estimated reverberation energy as explained above.

The reverberation estimating means is configured to estimate the reverberation energy $|\hat{R}_\mu(k)|^2$ of the at least some of the frames or sub-blocks according to the following formula

$$|\hat{R}_\mu(k)|^2 = |Y_\mu(k-D)|^2 A_\mu \exp(-\gamma_\mu D) + |\hat{R}_\mu(k-1)|^2 \exp(-\gamma_\mu)$$

where D is a predetermined delay, $A_\mu$ is a predetermined amplitude and $Y_\mu$ is a parameter determined on the basis of the at least one loudspeaker signal and wherein k denotes the frame number or the time index of the subsampled microphone signal, respectively, and $\mu$ denotes the index of the frequency bin or the index of the sub-band, respectively.

In particular, the reverberation estimating means can be configured to estimate the reverberation time $T_{60}$ and to calculate the parameter $Y_\mu$ as a function of the reverberation time and a subsampling rate $R_s$ by which the microphone signal is sub-sampled for frame or sub-block processing, in particular, according to the formula $Y_\mu = 6 \ln 10 \, R_s / T_{60} f_s$, where $f_s$ denotes the sampling rate of the microphone signal in the time domain.

According to an embodiment, the signal processing means further comprises an adaptive echo cancellation filtering means configured to estimate the impulse response of the loudspeaker-room-microphone system and wherein the dereverberation filtering means is configured to reduce the reverberation portion in the microphone signal on the basis of the estimated impulse response of the loudspeaker-room-microphone system.

The signal processing means according to another example is configured to directly estimate the reverberation energy in at least some of the frames or sub-blocks by an adaptive filtering means having filter coefficients modeling only the reverberation tail included in the microphone signal. The reverberation estimating means is, thus, differently configured to the ones mentioned above. Rather, according to this example it is provided a signal processing means as recited in claims 10, 11 or 12 further comprising

a microphone array comprising at least two microphones,

a beamforming means configured to receive microphone signals from the microphones of the microphone array and to obtain a beamformed microphone signal; and

an adaptive filtering means configured to filter the beamformed microphone signals only by filter coefficients that represent the impulse response of the loudspeaker-room-microphone system corresponding to the reverberation tail of the beamformed microphone signal and to estimate a reverberation portion of the beamformed microphone signal. In this example, the reverberation energy is estimated by means of the estimated reverberation portion of the microphone signal.

The beamformer combines multiple microphone input signals to one beamformed signal with an enhanced SNR. Adaptive and non-adaptive beamformers can be employed that are known in the art, see, e.g., "Optimum Array Processing, Part IV of Detection, Estimation, and Modulation Theory" by H.L. van Trees, Wiley & Sons, New York 2002. The fixed beamformer improves the signals pre-processed, e.g., by a means for time delay compensation, using a fixed beam pattern. Adaptive processing methods are characterized by a permanent adaptation of processing parameters such as filter coefficients during operation of the system. In particular, beamformers can amplify a wanted signal according to the direction from which acoustic signals are detected. The position of a speaker relative to the microphones of the microphone array can be determined by a means of the beamformer (see also discussion below).

The signal processing means according to one of the above examples can advantageously be employed in a great variety of communication systems. It is particularly useful in a hands-free telephony system. In the art, hands-free telephony often suffers from strong reverberation. The intelligibility of speech signals detected and processed by the inventive signal processing means and subsequently transmitted to a remote communication party can be significantly enhanced.

The present invention also provides a speech recognition means comprising the signal processing means according to one of above examples as well as a speech dialog system and a voice control system comprising such a speech recognition means or the signal processing means according to one of above examples. Speech recognition often suffers from the degradation of the quality of speech signals due to reverberation. The reliability of the recognition result of a speech recognition means and the successful operation of a speech dialog system or speech control system are greatly enhanced by employment of one of the above examples of the inventive signal processing means.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 illustrates basic steps of the herein disclosed method for dereverberation of a microphone signal comprising the steps of estimating the reverberation energy on the basis of the impulse response of a loudspeaker-room-microphone system and spectral subtraction.

Figure 2 illustrates an example of dereverberation of a microphone signal employing an echo cancellation filtering means.

Figure 3 illustrates an example of dereverberation of a microphone signal comprising the direct estimation of the reverberation energy used for spectral subtraction.

In the following example, it is assumed that signal processing is performed in the frequency domain (with the exception of a parameter describing the exponential decay in time of the reverberation energy, see below). Signal processing, however, could alternatively be performed in the sub-band regime.

With reference to Figure 1 an audio signal is detected by a microphone and A-D converted to obtain a digital microphone signal that is received 1 by a signal processing means and divided into multiple frames 2, e.g., of some 10 ms. The digital microphone signal is subject to a Short Time Fourier Transformation (STFT) for signal processing in the frequency domain 2. According to the present invention, at least one loudspeaker signal is provided by at least one loudspeaker that is used for the dereverberation of the microphone signal 3.

The impulse response of the loudspeaker-room-microphone system is estimated 4. According to the present example, an adaptive echo cancellation filtering means is employed. The filter coefficients of the echo cancellation filtering means are automatically adjusted to model the impulse response of the loudspeaker-room-microphone system. By means of the adapted filter coefficients the reverberation energy of the frames can be estimated 5. In detail, in this example this is achieved as follows.

Due to the effect of reverberation the detected acoustic spectrum is smeared over time. The smearing of the energy of the microphone signal can be modeled by

$$\left|Y_\mu(k)\right|^2 \approx \sum_{l=0}^{\infty}\left|X_{c,\mu}(k-l)\right|^2 G_\mu(l) \approx \left|X_\mu(k)\right|^2 + \left|R_\mu(k)\right|^2$$

where $X_{c,\mu}$ is the Fourier transformed signal emitted by the speaking person (clean speech signal) and $G_\mu$ models the energy decay of the impulse response of the loudspeaker-room-microphone system in the frequency domain and where it is assumed that the wanted signal $X_\mu(k)$ and the reverberation signal portion $R_\mu(k)$ are uncorrelated. The energy decay comprises a first part corresponding to a number of initial frames, say D frames, that exhibit no significant reverberation and a part contributing to the reverberation signal portion:

$$\left|R_\mu(k)\right|^2 \approx \sum_{l=D}^{\infty}\left|X_{c,\mu}(k-l)\right|^2 G_\mu(l).$$

The reverberation energy is to be determined for the spectral subtraction filtering of the microphone signal. Assuming an exponential decay of the reverberation energy for k > 0 (and $G_\mu(k) = 1$ for k = 0) the reverberation energy can be represented as follows:

$$\left|R_\mu(k)\right|^2 \approx \sum_{l=D}^{\infty}\left|X_{c,\mu}(k-l)\right|^2 A_\mu \exp(-\gamma_\mu l) = \sum_{m=-\infty}^{k-D}\left|X_{c,\mu}(m)\right|^2 A_\mu \exp(-\gamma_\mu(k-m))$$

$$= \left|X_{c,\mu}(k-D)\right|^2 A_\mu \exp(-\gamma_\mu D) + \sum_{m=-\infty}^{k-1-D}\left|X_{c,\mu}(m)\right|^2 A_\mu \exp(-\gamma_\mu(k-1-m)) \exp(-\gamma_\mu)$$

$$= \left|X_{c,\mu}(k-D)\right|^2 A_\mu \exp(-\gamma_\mu D) + \left|R_\mu(k-1)\right|^2 \exp(-\gamma_\mu)$$

where D is a fixed delay by D frames and $Y_\mu$ denotes the exponential decay parameter depending on room parameters as, e.g., the room size and absorption characteristics. The parameter $A_\mu$ denotes the ratio of the energy of the direct acoustic path from a source to the microphone to the reverberation energy that mainly depends on the position of a sound source or a speaking person relative to the microphone.

Approximating the speaking person's clean speech signal $|X_{c\mu}(k\text{-}D)|^2$ by the reverberated microphone signal $|Y_\mu(k\text{-}D)^2|$ an estimate for the reverberation energy can be calculated by the recursive formula

$$|\hat{R}_\mu(k)|^2 = |Y_\mu(k-D)|^2 A_\mu \exp(-\gamma_\mu D) + |\hat{R}_\mu(k-1)|^2 \exp(-\gamma_\mu).$$

The exponential decay parameter $Y_\mu$ according to the present example is determined in the time domain as follows (determination in the sub-band regime or the frequency domain would be possible correspondingly). Due to the determination in the time domain $y_\mu$ is the same for all $\mu$.

The above-mentioned echo cancellation filtering means is employed for filtering the microphone signal. The reverberation time $T_{60}$, which is defined as the time the reverberation needs to decay by 60 dB, is estimated form the energy decay curve ($EDC_L(n)$) given by the filter coefficients $\hat{h}_L(n)$ of the echo cancellation filtering means after convergence of the employed adaptation algorithm

$$EDC_L(n) = \frac{\sum_{i=n}^{L_L} \left|\hat{h}_L(i)\right|^2}{\sum_{i=0}^{L_L} \left|\hat{h}_L(i)\right|^2}$$

where $L_L$ denotes the length of the echo cancellation filtering means. The $EDC_L(n)$ can be interpreted as representing the total amount of signal energy remaining in the reverberator impulse response at time n. The slope of the $EDC_L(n)$ is estimated as follows. An upper and a lower threshold for a range of values of the $EDC_L(n)$, e.g., $E_{max}$= -20 dB and $E_{min}$ = -40 dB, are chosen. The discrete time indices $n_1$ and $n_2$ are determined for which the $EDC_L(n)$ exhibits values closest to $E_{max}$ and $E_{min}$, respectively. The reverberation time $T_{60}$ can, then, be determined by extrapolation of the slope of the $EDC_L(n)$:

$$T_{60} = \frac{1}{f_S} \frac{n_2 - n_1}{E_{max} - E_{min}} 60\,dB$$

where $f_s$ denotes the sampling rate of the digital microphone signal in the time domain. Given an exponential decay of the reverberation energy $\exp(-y_\mu k)$ an energy decrease by $10^{-6}$ (after the reverberation time $T_{60}$) implies $\exp(-y_\mu T_{60} f_s / R_s) = 10^{-6}$, where $R_s$ denotes a subsampling rate of the processed microphone signal (divided into frames or sub-blocks) due to the frame based or sub-block based overall processing. Accordingly, the exponential decay parameter is given by

$$Y_\mu = \frac{6\ln 10}{T_{60}\, f_s} R_s.$$

It is obvious that this expression can also be used, if the impulse response is determined differently, i.e. without employment of an echo cancellation filtering means.

The thus estimated reverberation energy is used for a spectral subtraction 6 in order to obtain a dereverberated microphone signal. The spectral subtraction can be performed by a Wiener filter. The microphone signal in each frame $Y_\mu(k)$ is supposed to consist of two assumingly uncorrelated parts (other contributions as, e.g., ambient noise are neglected here for simplicity): the wanted signal $X_\mu(k)$ and the reverberant signal contribution $R_\mu(k)$ where k and $\mu$ denote the frame number and the index of the frequency bin.

According to the spectral subtraction employed to achieve the dereverberated microphone signal $\hat{X}_\mu(k)$ the amplitudes of the microphone signal in each frame $Y_\mu(k)$ are scaled with real valued coefficients $W_\mu(k)$: $\hat{X}_\mu(k) = W_\mu(k)$ $Y_\mu(k)$. In this example, a Wiener filter is used for the coefficients $W_\mu(k)$:

$$\hat{X}_\mu(k) = \left(1 - \frac{\left|\hat{R}_\mu(k)\right|^2}{\left|Y_\mu(k)\right|^2}\right) Y_\mu(k).$$

with $\hat{R}_\mu(k)$ being determined by the above recursion formula.

The signal $\hat{X}_\mu(k)$ is eventually output 7. It may represent an enhanced microphone signal that is to be transmitted to a remote communication party in a hands-free telephony system. It can also represent an enhanced speech input for a speech recognition or voice control system.

Figure 2 illustrates parts of the inventive signal processing means. A loudspeaker-room-microphone system 10 is built by a loudspeaker 11, a microphone 11 and some closed surrounding as, e.g., a vehicular cabin or an office room. The microphone is used to detect a speaker's 13 utterances. The speech signals are detected in a direct path but also reflections from the surrounding are detected by the microphone 12.

The illustrated system also comprises an echo cancellation filtering means 14. The filter coefficients of the echo cancellation filtering means 14 are adapted to model the impulse response of the loudspeaker-room-microphone system. Thus, the information on the filter coefficients (after convergence) can be input in a dereverberation means 15 configured to perform dereverberation, e.g., in form of the spectral subtraction specified above. Note, that the impulse response of the speaker (speaking person) - room - microphone system, which is unknown, is approximated by the determined impulse response of the loudspeaker-room-microphone system. Thus, is desirable that the loudspeaker is as close to the speaking person as possible.

Figure 3 illustrates in some detail a signal processing means comprising loudspeakers 21, at least two microphones 22, a beamformer 23 and an adaptive filtering means 24 receiving a loudspeaker signal and filtering the beamformed microphone signal obtained by the beamformer 23 from the individual microphone signals of the microphones 22. The beamformer 23 may be a conventional delay-and-sum beamforming means.

A configuration as shown in Figure 3 can be used to directly estimate the reverberation energy of the microphone signal that is divided into frames without making use of the above recursion formula. The adaptive filtering means 24 comprises filter coefficients that model the impulse response of the loudspeaker-room-microphone system after convergence of the adaptation algorithm has been reached. For the direct estimate of the reverberation energy a subset $\tilde{h}$ of the filter coefficients $\hat{h}$ of the adaptive filtering means 24 matching the time section that correspond to the reverberation tail only is extracted and passed to another filtering means 25. For this filtering means 25, therefore, the direct acoustic path from the source of audio signals that are to be detected to the microphones 22 is not included.

By filtering of the beamformed microphone signal by the filtering means 25 an estimate for the reverberant signal portion of the beamfomed microphone signal and, thus, an estimate for the reverberation energy can be obtained. The output of the filtering means 25 and the beamformed microphone signal are input into a spectral subtraction section 26 that is configured to perform the processing described above, i.e. the beamformed microphone signal is subject to filtering by means of the above described Wiener filter on the basis of the estimated reverberation energy.

In this example, as well as in the examples described above, it must be assumed that the impulse response of the loudspeaker-to-microphone transfer is similar to the one from the speaking person (or, in general, the audio signal generating means generating audios signals that are to be detected) to the microphone which, in principle, is unknown. Thus, if a plurality of loudspeakers is present, it is important that the loudspeaker that is closest to the speaking person is chosen for an estimate of the impulse response of the loudspeaker-room-microphone system $\hat{h}$.

However, in order to obtain a reliable estimate for the reverberation energy the acoustic time delays have to be matched by the subset of filter coefficients $\tilde{h}$ chosen for estimating the reverberant portion of the beamformed microphone signal by the filtering means 25. Thus, the subset of filter coefficients $\tilde{h}$ is subject to a delay by $D_h$ samples. In addition, the energy of the estimated reverberation energy can be adjusted by some factor $b_h$.

The parameters $D_h$ and $b_h$ that allow for a better estimate of the reverberation energy can be determined, if the actual position of the person uttering speech signals relative to the microphones 22 is known. In the present example, this position is determined by the beamformer 23 in which a source localization algorithm as known in the art is implemented.

All previously discussed embodiments are not intended as limitations but serve as examples illustrating features and advantages of the invention.

**Claims**

1.  Method for dereverberation of a microphone signal, comprising the steps of dividing the microphone signal into frames or sub-bands;
    providing at least one loudspeaker signal;
    estimating the impulse response of a loudspeaker-room-microphone system comprising the at least one loudspeaker providing the at least one loudspeaker signal and at least one microphone providing the microphone signal;
    estimating the reverberation energy in at least some of the frames or sub-bands on the basis of the microphone signal and on the basis of the estimated impulse response of the loudspeaker-room-microphone system; and filtering the microphone signal on the basis of the estimated reverberation energy of the at least some of the frames or sub-bands;
    wherein the reverberation energy $|\hat{R}_\mu(k)|^2$ of the at least some of the frames or sub-blocks is recursively estimated according to the following formula

$$|\hat{R}_\mu(k)|^2 = |Y_\mu(k-D)|^2 A_\mu \exp(-\gamma_\mu D) + |\hat{R}_\mu(k-1)|^2 \exp(-\gamma_\mu)$$

    where D is a predetermined delay, $A_\mu$ is a predetermined amplitude and $\gamma_\mu$ is a parameter determined on the basis of the estimated impulse response of the loudspeaker-room-microphone system and wherein k denotes the frame number or the time index of the subsampled microphone signal, respectively, and $\mu$ denotes the index of the frequency bin or the index of the sub-band, respectively.

2.  Method according to claim 1, further comprising filtering the microphone signal by means of an adaptive echo cancellation filtering means and wherein the impulse response of the loudspeaker-room-microphone system is determined from the adapted filter coefficients of the adaptive echo cancellation filtering means.

3.  Method according to one of the preceding claims, wherein the microphone signal is transformed into the frequency domain and subsequently divided into the frames or wherein the microphone signal is divided into the frames that subsequently are transformed into the frequency domain.

4.  Method according to claim 3, wherein
    the microphone signal is Fourier transformed to obtain Fourier transformed signals $Y_\mu(k)$, where k and $\mu$ denote the frame number and the index of the frequency bin, respectively; and
    at least some of the Fourier transformed signals $Y_\mu(k)$ are filtered by a Wiener filter $W_\mu(k) = 1 - |\hat{R}_\mu(k)|^2 / |Y_\mu(k)|^2$ to obtain filtered signals $\hat{X}_\mu(k)$ according to
    $\hat{X}_\mu(k) = W_\mu(k) Y_\mu(k)$, where $|\hat{R}_\mu(k)|^2$ denotes the estimated reverberation energy of the at least some of the frames.

5.  Method according to claim 3, wherein
    the microphone signal is filtered by a filter-bank to obtain sub-band signals $Y_\mu(k)$, where k and $\mu$ denote the time index of the subsampled microphone signal that is filtered by the filter-bank and the index of the sub-band, respectively; and
    at least some of the sub-band signals $Y_\mu(k)$ are filtered by a Wiener filter $W_\mu(k) = 1 = |\hat{R}_\mu(k)|^2 / |Y_\mu(k)|^2$ to obtain filtered signals $\hat{X}_\mu(k)$ according to $\hat{X}_\mu(k) = W_\mu(k) Y_\mu(k)$, where $|\hat{R}_\mu(k)|^2$ denotes the estimated reverberation energy of the at least some of the sub-bands.

6.  Method according to claim 1, further comprising estimating reverberation time $T_{60}$ and wherein the parameter $Y_\mu$ is calculated as a function of the reverberation time and a subsampling rate $R_s$ by which the microphone signal is sub-sampled for frame or sub-block processing, in particular, according to the formula $Y_\mu = 6 \ln 10 \, R_s / T_{60} f_s$, where $f_s$ denotes the sampling rate of the microphone signal in the time domain.

7.  Method according to one of the claims 1 - 3, further comprising filtering the microphone signal by means of a filtering means and wherein the filter coefficients are determined from the adapted filter coefficients of an adaptive echo cancellation filtering means.

8. Method according to one of the claims 1 - 3, further comprising
filtering the microphone signal by an adaptive filtering means having only filter coefficients that represent the impulse response of the loudspeaker-room-microphone system corresponding to the reverberation tail of the microphone signal to estimate a reverberation portion of the microphone signal; and wherein
the reverberation energy is estimated by means of the estimated reverberation portion of the microphone signal.

9. Signal processing means, comprising
at least one microphone (12) configured to obtain a microphone signal;
at least one loudspeaker (11) configured to output a loudspeaker signal;
a reverberation estimating means configured to estimate the reverberation energy of a reverberation portion in the microphone signal on the basis of the microphone signal;
a dereverberation filtering means (15) configured to receive the microphone signal and to reduce the reverberation portion in the microphone signal on the basis of the estimated reverberation energy; and
an adaptive echo cancellation filtering means configured to estimate the impulse response of the loudspeaker-room-microphone system
wherein
the dereverberation filtering means is configured to reduce the reverberation portion in the microphone signal on the basis of the estimated impulse response of the loudspeaker-room-microphone system and wherein the reverberation estimating means is configured to recursively estimate the reverberation energy $|\hat{R}_\mu(k)|^2$ of the at least some of the frames or sub-blocks according to the following formula

$$|\hat{R}_\mu(k)|^2 = |Y_\mu(k-D)|^2 A_\mu \exp(-\gamma_\mu D) + |\hat{R}_\mu(k-1)|^2 \exp(-\gamma_\mu)$$

where D is a predetermined delay, $A_\mu$ is a predetermined amplitude and $\gamma_\mu$ is a parameter determined on the basis of the estimated impulse response of the loudspeaker-room-microphone system and wherein k denotes the frame number or the time index of the subsampled microphone signal, respectively, and $\mu$ denotes the index of the frequency bin or the index of the sub-band, respectively.

10. The signal processing means according to claim 9, further comprising a processing means configured to divide the microphone signal into frames and a Fourier transformation means configured to Fourier transform the microphone signal or further comprising a filter bank configured to divide the microphone signals into sub-band microphone signals.

11. The signal processing means according to claim 9 or 10, wherein the dereverberation filtering means comprises a spectral subtraction means, in particular, a Wiener filter, configured to filter the microphone signal for at least some of the frames or to filter at least some of the sub-band microphone signals on the basis of the estimated reverberation energy.

12. The signal processing means according to claim 9, wherein the reverberation estimating means is configured to estimate the reverberation time $T_{60}$ and to calculate the parameter $\gamma_\mu$ as a function of the reverberation time and a subsampling rate $R_s$ by which the microphone signal is sub-sampled for frame or sub-block processing, in particular, according to the formula $\gamma_\mu = 6 \ln 10 \, R_s / T_{60} f_s$, where fs denotes the sampling rate of the microphone signal in the time domain.

13. The signal processing means according to one of the claims 9 - 11, further comprising
a microphone array comprising at least two microphones,
a beamforming means configured to receive microphone signals from the microphones of the microphone array and to obtain a beamformed microphone signal; and
an adaptive filtering means configured to filter the beamformed microphone signals only by filter coefficients that represent the impulse response of the loudspeaker-room-microphone system corresponding to the reverberation tail of the beamformed microphone signal and to estimate a reverberation portion of the beamformed microphone signal; and wherein
the reverberation estimating means configured to estimate the reverberation energy of the reverberation portion in the microphone signal by means of the estimated reverberation portion of the microphone signal.

14. Hands-free telephony system, comprising the signal processing means according to one of the claims 9 - 13.

15. Speech recognition means comprising the signal processing means according to one of the claims 9 - 13.

16. Speech dialog system or voice control system comprising the speech recognition means according to claim 15 or the signal processing means according to one of the claims 9 - 13.

**Patentansprüche**

1. Verfahren zur Enthallung eines Mikrofonsignals, das die Schritte umfasst Teilen des Mikrofonsignals in Frames oder Teilbänder;
Bereitstellen von zumindest einem Lautsprechersignal;
Schätzen der Impulsantwort eines Lautsprecher-Raum-Mikrofon-Systems, das den zumindest einen Lautsprecher, der das zumindest eine Lautsprechersignal bereitstellt, und zumindest ein Mikrofon, das das Mikrofonsignal bereitstellt, umfasst;
Schätzen der Hallenergie in zumindest einigen der Frames oder Teilbänder auf der Grundlage des Mikrofonsignals und auf der Grundlage der geschätzten Impulsantwort des Lautsprecher-Raum-Mikrofon-Systems; und
Filtern des Mikrofonsignals auf der Grundlage der geschätzten Hallenergie der zumindest einigen der Frames oder Teilbänder;
wobei die Hallenergie $|\hat{R}_\mu(k)|^2$ der zumindest einigen der Frames oder Teilbänder rekursiv gemäß der folgenden Formel geschätzt wird

$$|\hat{R}_\mu(k)|^2 = |Y_\mu(k-D)|^2 A_\mu \exp(-\gamma_\mu D) + |\hat{R}_\mu(k-1)|^2 \exp(-\gamma_\mu),$$

wobei D eine vorbestimmte Verzögerung ist, $A_\mu$ eine vorbestimmte Amplitude ist und $\gamma_\mu$ ein Parameter ist, der auf der Grundlage der geschätzten Impulsantwort des Lautsprecher-Raum-Mikrofon-Systems bestimmt wird, und wobei k die Frame-Zahl oder den Zeitindex des
unterabgetasteten Mikrofonsignals bezeichnet und $\mu$ den Index des Frequenzbins bzw. den Index des Teilbands bezeichnet.

2. Verfahren gemäß Anspruch 1, das weiterhin das Filtern des Mikrofonsignals mithilfe einer adaptiven Echoreduktionsfiltereinrichtung umfasst, und wobei die Impulsantwort des Lautsprecher-Raum-Mikrofon-Systems aus den adaptierten Filterkoeffizienten der adaptiven Echoreduktionsfiltereinrichtung bestimmt wird.

3. Verfahren gemäß einem der vorhergehenden Ansprüche, in dem das Mikrofonsignal in den Frequenzbereich transformiert und nachfolgend in die Frames unterteilt wird, oder in dem das Mikrofonsignal in die Frames unterteilt wird, die nachfolgend in den Frequenzbereich transformiert werden.

4. Verfahren gemäß Anspruch 3, in dem
das Mikrofonsignal Fourier-transformiert wird, um Fourier-transformierte Signale $Y_\mu(k)$ zu erhalten, wobei k und $\mu$ die Framezahl bzw. den Index des Frequenzbins bezeichnen; und
zumindest einige der Foruier-transformierten Signale $Y_\mu(k)$ mit einem Wiener-Filter $W_\mu(k) = 1 - |\hat{R}_\mu(k)|^2 / |Y_\mu(k)|^2$ gefiltert werden, um gefilterte
Signale $\hat{X}_\mu(k)$ gemäß $\hat{X}_\mu(k) = W_\mu(k) Y_\mu(k)$ zu erhalten, wobei $|\hat{R}_\mu(k)|^2$ die geschätzte Hallenergie der zumindest einigen Frames bezeichnet.

5. Verfahren gemäß Anspruch 3, in dem
das Mikrofonsignal mit einer Filterbank gefiltert wird, um Teilbandsignale $Y_\mu(k)$ zu erhalten, wobei k und $\mu$ den Zeitindex des unterabgetasteten Mikrofonsignals, das mit der Filterbank gefiltert wird, bzw. den Index des Teilbands bezeichnen; und

zumindest einige der Teilbandsignale $Y_\mu(k)$ mit einem Wiener-Filter $W_\mu(k) = 1 - |\hat{R}_\mu(k)|^2 / |Y_\mu(k)|^2$ gefiltert werden, um gefilterte Signale $\hat{X}_\mu(k)$ gemäß $\hat{X}_\mu(k) = W_\mu(k) Y_\mu(k)$ zu erhalten, wobei $|\hat{R}_\mu(k)|^2$ die geschätzte Hallenergie der zumindest einigen Teilbänder bezeichnet.

6. Verfahren gemäß Anspruch 1, das weiterhin das Schätzen der Hallzeit $T_{60}$ umfasst, und wobei der Parameter $\gamma_\mu$ als eine Funktion der Hallzeit und einer Unterabtastrate $R_s$, mit der das Mikrofonsignal zur Frame- oder Teilblockverarbeitung unterabgetastet wird, insbesondere gemäß der Formel $\gamma_\mu = 6 \ln 10 \, R_s / T_{60} f_s$, in der $f_s$ die Abtastrate des Mikrofonsignals im Zeitbereich bezeichnet, berechnet wird.

7. Verfahren gemäß einem der Ansprüche 1 - 3, das weiterhin das Filtern des Mikrofonsignals mithilfe einer Filtereinrichtung umfasst, und wobei die Filterkoeffizienten aus den adaptierten Filterkoeffizienten einer adaptiven Echoreduktionsfiltereinrichtung bestimmt werden.

8. Verfahren gemäß einem der Ansprüche 1 - 3, das weiterhin umfasst
Filtern des Mikrofonsignals mit einer adaptiven Filtereinrichtung, die ausschließlich Filterkoeffizienten besitzt, die die Impulsantwort des Lautsprecher-Raum-Mikrofon-Systems entsprechend dem Hallschwanz des Mikrofonsignals darstellen, um einen Hallabschnitt des Mikrofonsignals zu schätzen; und wobei
die Hallenergie mithilfe des geschätzten Hallabschnitts des Mikrofonsignals geschätzt wird.

9. Signalverarbeitungseinrichtung, die umfasst
zumindest ein Mikrofon (12), das dazu ausgebildet ist, ein Mikrofonsignal zu erhalten;
zumindest einen Lautsprecher (11), der dazu ausgebildet ist, ein Lautsprechersignal auszugeben;
eine Einrichtung zum Schätzen eines Halls, die dazu ausgebildet ist, die Hallenergie eines Hallanteils in dem Mikrofonsignal auf der Grundlage des Mikrofonsignals zu schätzen;
eine Hallfiltereinrichtung (15), die dazu ausgebildet ist, das Mikrofonsignal zu empfangen und den Hallanteil in dem Mikrofonsignal auf der Grundlage der geschätzten Hallenergie zu verringern; und
eine Echoreduktionsfiltereinrichtung, die dazu ausgebildet ist, die Impulsantwort des Lautsprecher-Raum-Mikrofon-Systems zu schätzen;
wobei
die Hallfiltereinrichtung dazu ausgebildet ist, den Hallanteil in dem Mikrofonsignal auf der Grundlage der geschätzten Impulsantwort des Lautsprecher-Raum-Mikrofon-Systems zu verringern und wobei die Einrichtung zum Schätzen eines Halls dazu ausgebildet ist, die Hallenergie $|\hat{R}_\mu(k)|^2$ der zumindest einigen der Frames oder Teilbänder rekursiv gemäß der folgenden Formel zu schätzen

$$|\hat{R}_\mu(k)|^2 = |Y_\mu(k-D)|^2 \, A_\mu \exp(-\gamma_\mu D) + |\hat{R}_\mu(k-1)|^2 \exp(-\gamma_\mu),$$

wobei D eine vorbestimmte Verzögerung ist, $A_\mu$ eine vorbestimmte Amplitude ist und $\gamma_\mu$ ein Parameter ist, der auf der Grundlage der geschätzten Impulsantwort des Lautsprecher-Raum-Mikrofon-Systems bestimmt wird, und wobei k die Frame-Zahl oder den Zeitindex des unterabgetasteten Mikrofonsignals bezeichnet und $\mu$ den Index des Fre-quenzbins bzw. den Index des Teilbands bezeichnet.

10. Die Signalverarbeitungseinrichtung gemäß Anspruch 9, die weiterhin eine Verarbeitungseinrichtung, die dazu ausgebildet ist, das Mikrofonsignal in
Frames zu unterteilen, und eine Fourier-Transformationseinrichtung, die dazu ausgebildet ist, das Mikrofonsignal Fourier zu transformieren, umfasst oder die weiterhin eine Filterbank umfasst, die dazu ausgebildet ist, das Mikrofonsignal in Teilband-Mikrofonsignale zu unterteilen.

11. Die Signalverarbeitungseinrichtung gemäß Anspruch 9 oder 10, in der die Hallfiltereinrichtung eine Einrichtung zur spektralen Subtraktion, insbesondere ein Wiener-Filter, umfasst, die dazu ausgebildet ist, auf der Grundlage der geschätzten Hallenergie das Mikrofonsignal für zumindest einige der Frames zu filtern oder zumindest einige der Teilband-Mikrofonsignale zu filtern.

12. Die Signalverarbeitungseinrichtung gemäß Anspruch 9, in der die Einrichtung zum Schätzen eines Halls dazu ausgebildet ist, die Hallzeit $T_{60}$ zu schätzen und den Parameter $\gamma_\mu$ als eine Funktion der Hallzeit und einer Unter-

abtastrate R$_s$, mit der das Mikrofonsignal zur Frame- oder Teilblockverarbeitung unterabgetastet wird, insbesondere gemäß der Formel $\gamma_\mu$ = 6 ln 10 R$_s$ / T$_{60}$ f$_s$, in der f$_s$ die Abtastrate des Mikrofonsignals im Zeitbereich bezeichnet, zu berechnen.

**13.** Die Signalverarbeitungseinrichtung gemäß einem der Ansprüche 9 - 11, die weiterhin umfasst
eine Mikrofonanordnung, die zumindest zwei Mikrofone umfasst;
eine Beamforming-Einrichtung, die dazu ausgebildet ist, Mikrofonsignale von den Mikrofonen der Mikrofonanordnung zu empfangen und ein gebeamformtes Mikrofonsignal zu erhalten; und
eine adaptive Filtereinrichtung, die dazu ausgebildet ist, die gebeamformten Mikrofonsignale ausschließlich mit Filterkoeffizienten zu filtern, die die Impulsantwort des Lautsprecher-Raum-Mikrofon-Systems entsprechend dem Hallschwanz des gebeamformten Mikrofonsignals darstellen und einen Hallanteil des gebeamformten Mikrofonsignals zu schätzen; und wobei
die Einrichtung zum Schätzen eines Halls dazu ausgebildet ist, die Hallenergie des Hallanteils des Mikrofonsignals mithilfe des geschätzten Hallanteils des Mikrofonsignals zu schätzen

**14.** Freihand-Telefonsystem, das die Signalverarbeitungseinrichtung gemäß einem der Ansprüche 9 - 13 umfasst.

**15.** Spracherkennungsvorrichtung, die die Signalverarbeitungseinrichtung gemäß einem der Ansprüche 9 - 13 umfasst.

**16.** Sprachdialogsystem oder Sprachsteuerungssystem, das die Spracherkennungsvorrichtung gemäß Anspruch 15 oder die Signalverarbeitungseinrichtung gemäß einem der Ansprüche 9 - 13 umfasst.

## Revendications

**1.** Procédé de déréverbération d'un signal de microphone, comprenant les étapes consistant à
diviser le signal de microphone en trames ou sous-bandes ;
pourvoir au moins un signal de haut-parleur ; estimer la réponse d'impulsion d'un système haut-parleur/pièce/microphone comprenant ledit au moins un haut-parleur qui pourvoit ledit au moins un signal de haut-parleur et au moins un microphone qui pourvoit le signal de microphone ;
estimer l'énergie de réverbération dans au moins certaines desdites trames ou sous-bandes sur base du signal de microphone et sur base de la réponse d'impulsion estimée du système haut-parleur/pièce/microphone ; et
filtrer le signal de microphone sur base de l'énergie de réverbération estimée dans lesdites au moins certaines trames ou sous-bandes ;
dans lequel l'énergie de réverbération $|\hat{R}_\mu(k)|^2$ desdits au moins certains sous-blocs ou trames est estimée de façon récursive selon la formule suivante

$$\left|\hat{R}_\mu(k)\right|^2 = \left|Y_\mu(k-D)\right|^2 A_\mu \exp(-\gamma_\mu D) + \left|\hat{R}_\mu(k-1)\right|^2 \exp(-\gamma_\mu)$$

où D est un délai prédéterminé, $A_\mu$ est une amplitude prédéterminée, et $\gamma_\mu$ est un paramètre déterminé sur base de la réponse d'impulsion estimée du système haut-parleur/pièce/microphone, et dans lequel k désigne le numéro de trame ou l'index temporel du signal de microphone sous-échantillonné, respectivement, et $\mu$ désigne l'index de l'intervalle de fréquence ou l'index de la sous-bande, respectivement.

**2.** Procédé selon la revendication 1, comprenant en outre le filtrage du signal de microphone au moyen d'un moyen de filtrage d'annulation d'écho adaptatif, et dans lequel la réponse d'impulsion du système haut-parleur/pièce/microphone est déterminée à partir des coefficients de filtre adaptés du moyen de filtrage d'annulation d'écho adaptatif.

**3.** Procédé selon l'une des revendications précédentes, dans lequel le signal de microphone est transformé dans le domaine de fréquence et divisé ensuite en trames, ou dans lequel le signal de microphone est divisé en trames qui sont transformées ensuite dans le domaine de fréquence.

**4.** Procédé selon la revendication 3, dans lequel
le signal de microphone est soumis à une transformée de Fourier pour obtenir des signaux à transformée de Fourier

$Y_\mu(k)$, où $k$ et $\mu$ désignent le numéro de trame et l'index de l'intervalle de fréquence, respectivement ; et
au moins certains des signaux à transformée de Fourier $Y_\mu(k)$ sont filtrés par un filtre de Wiener
$W_\mu(k)=1-|\hat{R}_\mu(k)|^2/|Y_\mu(k)|^2$ pour obtenir des signaux filtrés $\hat{X}_\mu(k)$ selon l'expression $\hat{X}_\mu(k)=W_\mu(k)Y_\mu(k)$, où $|\hat{R}_\mu(k)|^2$
désigne l'énergie de réverbération estimée d'au moins certaines des trames.

5. Procédé selon la revendication 3, dans lequel le signal de microphone est filtré par un banc de filtres pour obtenir des signaux de sous-bande $Y_\mu(k)$, où $k$ et $\mu$ désignent respectivement l'index temporel du signal de microphone sous-échantillonné qui est filtré par le banc de filtres et l'index de la sous-bande ; et
au moins certains des signaux de sous-bande $Y_\mu(k)$ sont filtrés par un filtre de Wiener $W_\mu(k)=1-|\hat{R}_\mu(k)|^2/|Y_\mu(k)|^2$ pour obtenir des signaux filtrés $\hat{X}_\mu(k)$ selon l'expression $\hat{X}_\mu(k)=W_\mu(k)Y_\mu(k)$, où $|\hat{R}_\mu(k)|^2$ désigne l'énergie de réverbération estimée d'au moins certaines des sous-bandes.

6. Procédé selon la revendication 1, comprenant en outre l'estimation du temps de réverbération $T_{60}$, et dans lequel le paramètre $\gamma_\mu$ est calculé comme une fonction du temps de réverbération et d'un taux de sous-échantillonnage $\overline{R_s}$ selon lequel le signal de microphone est sous-échantillonné pour le traitement de trame ou de sous-bloc, en particulier selon la formule $\gamma_\mu = 6\ln10\, R_s / T_{60}\, f_s$, où $f_s$ désigne le taux d'échantillonnage du signal de microphone dans le domaine temporel.

7. Procédé selon l'une des revendications 1 à 3, comprenant en outre le filtrage du signal de microphone à l'aide d'un moyen de filtrage, et dans lequel les coefficients de filtre sont déterminés à partir des coefficients de filtre adaptés d'un moyen de filtrage d'annulation d'écho adaptatif.

8. Procédé selon l'une des revendications 1 à 3, comprenant en outre
le filtrage du signal de microphone par un moyen de filtrage adaptatif comportant uniquement des coefficients de filtre qui représentent la réponse d'impulsion du système haut-parleur/pièce/microphone correspondant à la queue de réverbération du signal de microphone pour estimer une partie de réverbération du signal de microphone ; et dans lequel
l'énergie de réverbération est estimée au moyen de la partie de réverbération estimée du signal de microphone.

9. Moyen de traitement de signal, comprenant
au moins un microphone (12) configuré pour obtenir un signal de microphone ;
au moins un haut-parleur (11) configuré pour sortir un signal de haut-parleur ;
un moyen d'estimation de réverbération configuré pour estimer l'énergie de réverbération d'une partie de réverbération dans le signal de microphone sur base du signal de microphone ;
un moyen de filtrage de déréverbération (15) configuré pour recevoir le signal de microphone et pour réduire la partie de réverbération dans le signal de microphone sur base de l'énergie de réverbération estimée ; et
un moyen de filtrage d'annulation d'écho adaptatif configuré pour estimer la réponse d'impulsion du système haut-parleur/pièce/microphone
dans lequel
le moyen de filtrage de déréverbération est configuré pour réduire la partie de réverbération dans le signal de microphone sur base de la réponse d'impulsion estimée du système haut-parleur/pièce/microphone et dans lequel le moyen d'estimation de réverbération est configuré pour estimer de façon récursive l'énergie de réverbération $|\hat{R}_\mu(k)|^2$ desdits au moins certains sous-blocs ou trames selon la formule suivante

$$\left|\hat{R}_\mu(k)\right|^2 = \left|Y_\mu(k-D)\right|^2 A_\mu \exp(-\gamma_\mu D) + \left|\hat{R}_\mu(k-1)\right|^2 \exp(-\gamma_\mu)$$

où $D$ est un délai prédéterminé, $A_\mu$ est une amplitude prédéterminée, et $\gamma_\mu$ est un paramètre déterminé sur base de la réponse d'impulsion estimée du système haut-parleur/pièce/microphone, et dans lequel $k$ désigne le numéro de trame ou l'index temporel du signal de microphone sous-échantillonné, respectivement, et $\mu$ désigne l'index de l'intervalle de fréquence ou l'index de la sous-bande, respectivement.

10. Moyen de traitement de signal selon la revendication 9, comprenant en outre un moyen de traitement configuré pour diviser le signal de microphone en trames et un moyen de transformée de Fourier configuré pour effectuer une transformée de Fourier du signal de microphone ou comprenant en outre un banc de filtres configuré pour diviser les signaux de microphone en signaux de microphone de sous-bande.

**11.** Moyen de traitement de signal selon la revendication 9 ou 10, dans lequel le moyen de filtrage de déréverbération comprend un moyen de soustraction spectrale, en particulier un filtre de Wiener, configuré pour filtrer le signal de microphone pour au moins certaines des trames ou pour filtrer au moins certains des signaux de microphone de sous-bande sur base de l'énergie de réverbération estimée.

**12.** Moyen de traitement de signal selon la revendication 9, dans lequel le moyen d'estimation de réverbération est configuré pour estimer le temps de réverbération $T_{60}$ et pour calculer le paramètre $\gamma_\mu$ comme une fonction du temps de réverbération et d'un taux de sous-échantillonnage $R_s$ selon lequel le signal de microphone est sous-échantillonné pour le traitement de trame ou de sous-bloc, en particulier selon la formule $\gamma_\mu = 6 \ln 10\, R_s / T_{60}\, f_s'$ où $f_s$ désigne le taux d'échantillonnage du signal de microphone dans le domaine temporel.

**13.** Moyen de traitement de signal selon l'une des revendications 9 à 11, comprenant en outre un réseau de microphones comprenant au moins deux microphones, un moyen de formation de faisceau configuré pour recevoir des signaux de microphone des microphones du réseau de microphones et pour obtenir un signal de microphone formé en faisceau ; et un moyen de filtrage adaptatif configuré pour filtrer les signaux de microphone formés en faisceau uniquement avec des coefficients de filtre qui représentent la réponse d'impulsion du système haut-parleur/pièce/microphone correspondant à la queue de réverbération du signal de microphone formé en faisceau et pour estimer une partie de réverbération du signal de microphone formé en faisceau ; et dans lequel le moyen d'estimation de réverbération est configuré pour estimer l'énergie de réverbération de la partie de réverbération dans le signal de microphone au moyen de la partie de réverbération estimée du signal de microphone.

**14.** Système de téléphonie mains-libres, comprenant le moyen de traitement de signal selon l'une des revendications 9 à 13.

**15.** Moyen de reconnaissance vocale comprenant le moyen de traitement de signal selon l'une des revendications 9 à 13.

**16.** Système de dialogue vocal ou système de commande vocale comprenant le moyen de reconnaissance vocale selon la revendication 15 ou le moyen de traitement de signal selon l'une des revendications 9 à 13.

| receive microphone signal | ~1 |

| divide microphone signal into frames & STFT | ~2 |

| receive loudspeaker signal | ~3 |

| estimate impulse response of loudspeaker-room-microphone-system | ~4 |

| estimate reverberation energy | ~5 |

| spectral subtraction | ~6 |

| output dereverberated signal | ~7 |

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1521240 A
- WO 2006011104 A
- US 6694020 B1

**Non-patent literature cited in the description**

- **LEBART K et al.** A NEW METHOD BASED ON SPECTRAL SUBTRACTION FOR SPEECH DERE-VERBERATION. ACUSTICA, S. HIRZEL VERLAG, May 2001, 359-366
- **M. R. SCHROEDER.** New Method of Measuring Reverberation Time. *THE JOURNAL OF THE ACOUSTICAL SOCIETY OF AMERICA,* 14 December 1964, vol. 37 (3), 409-412
- **E. HÄNSLER ; G. SCHMIDT.** Acoustic Echo and Noise Control. John Wiley & Sons, 2004
- **H.L. VAN TREES.** Optimum Array Processing, Part IV of Detection, Estimation, and Modulation Theory. Wiley & Sons, 2002